# EUROPÄISCHE PATENTANMELDUNG

(11) **EP 3 182 236 A1**
(43) Veröffentlichungstag der Anmeldung: **21.06.2017**
(21) Anmeldenummer: 16002406.3
(22) Anmeldetag: 14.11.2016
(51) Int. Cl.: G05B 19/409, F16P 3/12, G05B 19/418, H04W 4/04

(54) **SYSTEM ZUM BETREIBEN EINER VERPACKUNGSANLAGE FÜR PRODUKTE, INSBESONDERE TABAKARTIKEL**

(30) Priorität: 16.12.2015 DE 102015016444
(71) Anmelder: Focke & Co. (GmbH & Co. KG), 27283 Verden (DE)
(72) Erfinder: Soboll, Kai, 27232 Sulingen (DE); Wahlers, Olaf, 27321 Thedinghausen (DE)
(74) Vertreter: Aulich, Martin

(57) **Zusammenfassung**

Die Erfindung betrifft eine Verpackungsanlage sowie ein System und ein Verfahren zum Betreiben derselben für Produkte, insbesondere Tabakartikel, mit einem mit der Verpackungsanlage (10, 11) koppelbaren und wieder entkoppelbaren, mobilen Bediengerät (28a, b), insbesondere einem Smart-Device, zum (Fern-)Bedienen von bedienbaren, insbesondere potentiell Werker gefährdenden Einrichtungen der Verpackungsanlage, beispielsweise bewegbaren Organen, mit mehreren Sicherheitszonen (32) im räumlichen Umfeld der Verpackungsanlage (10, 11), und mit einer Erkennungseinrichtung, mit der im gekoppelten Zustand des mobilen Bediengeräts (28a, b) für den Fall, dass sich das mobile Bediengerät (28a, b) oder ein das mobile Bediengerät benutzender Werker innerhalb einer der Sicherheitszonen (32) befinden, erkannt werden kann, in welcher Sicherheitszone (32) sich das Bediengerät (28a, b) oder der Werker (33) befinden

## Beschreibung

Die vorliegende Erfindung betrifft eine Verpackungsanlage für Produkte, insbesondere Tabakartikel, sowie ein System und ein Verfahren zum Betreiben derselben.

Es ist bekannt, Verpackungsanlagen für Tabakartikel, insbesondere einzelne oder mehrere bewegbare Organe derselben, mit kabelgebunden angekoppelten Bediengeräten, wie etwa elektronischen Handrädern, Tastern etc. fernzubedienen. Dies ist insbesondere im Wartungs- oder Einrichtbetrieb einer solchen Anlage sinnvoll, wenn beispielsweise in Förderern verklemmte Packungen entfernt oder andere Fehler beseitigt werden müssen. Mit dem Bediengerät können beispielsweise gezielt Servomotoren von Antrieben bewegbarer Organe bedient werden oder auch - falls die Anlage über eine solche verfügt - eine Königswelle in Bewegung versetzt werden.

Je nach Reichweite der Kabelverbindung zwischen Bediengerät und Verpackungsanlage kann es passieren, dass ein das Bediengerät benutzender Werker weit von seinem Standort entfernt bewegbare Organe in Bewegung versetzt, ohne Sichtkontakt zu diesen zu haben. Dies ist unter sicherheitstechnischen Aspekten problematisch. Denn andere Personen, die in der Nähe dieser entfernten bewegbaren Organe arbeiten oder sich dort aufhalten, werden gefährdet, ohne dass dies der das Bediengerät benutzende Werker feststellen kann.

Ausgehend hiervon ist es Aufgabe der vorliegenden Erfindung, das System und die Verpackungsanlage der eingangs genannten Art weiterzuentwickeln.

Diese Aufgabe wird gelöst durch ein System mit den Merkmalen des Anspruchs 1, eine Verpackungsanlage mit den Merkmalen des Anspruchs 13 sowie ein Verfahren mit den Merkmalen des Anspruchs 15.

Danach wird erfindungsgemäß unter anderem ein System zum Betreiben einer Verpackungsanlage für Produkte, insbesondere Tabakartikel, zur Verfügung gestellt, das über ein mit der Verpackungsanlage koppelbares und wieder entkoppelbares, mobiles Bediengerät, insbesondere ein Smart-Device, zum (Fern-)Bedienen von insbesondere Werker potentiell gefährdenden, bedienbaren Einrichtungen der Anlage verfügt, beispielsweise bewegbaren Organen der Verpackungsanlage, über mehrere (virtuelle bzw. gedachte) eingerichtete, insbesondere separate Sicherheitszonen im räumlichen Umfeld der Verpackungsanlage, und über eine Erkennungseinrichtung, mit der im gekoppelten Zustand des mobilen Bediengeräts für den Fall, dass sich das Bediengerät oder ein das mobile Bediengerät benutzender Werker innerhalb einer der Sicherheitszonen befinden, erkannt wird (oder erkannt werden kann), in welcher der vorhandenen Sicherheitszone sich das Bediengerät oder der Werker befinden.

Über die Definition und Einrichtung von Sicherheitszonen an bzw. allgemein im Umfeld der Verpackungsmaschine sowie die Erkennung, ggf. in welcher Sicherheitszone sich das Bediengerät oder der Werker befinden, wird die Möglichkeit geschaffen, unabhängig von der tatsächlichen Reichweite der Signalübertragungsleitung zwischen gekoppeltem Bediengerät und Verpackungsanlage mittelbar diejenigen Anlagenbereiche festzulegen, auf die das Bediengerät Einfluss haben soll. Beispielsweise kann systemseitig festgelegt sein, dass für den Fall, dass sich der Werker/das Bediengerät in einer Sicherheitszone 1 befinden, die mit dem Bediengerät bedienbaren, insbesondere potentiell für einen Werker gefährdenden Einrichtungen der Verpackungsanlage, die einer anderen Sicherheitszone 2 zugeordnet sind, nicht bedienbar sind. Oder dass für den Fall, dass sich der Werker aus der Sicherheitszone 1 herausbewegt, die bedienbaren Einrichtungen der Sicherheitszone 1 nicht mehr bedienbar sind.

Vorzugsweise ist einer ersten Sicherheitszone ein erstes bewegbares Organ der Verpackungsanlage zugeordnet, das mit dem gekoppelten mobilen Bediengerät bedienbar ist, sofern sich das mobile Bediengerät oder der Werker innerhalb der ersten Sicherheitszone befinden, mit diesem dagegen nicht bedienbar ist, sofern sich das mobile Bediengerät oder der Werker außerhalb der ersten Sicherheitszone befinden. Das erfindungsgemäße Konzept ist aber nicht auf die Bedienung bewegbarer Organe beschränkt, sondern kann allgemein auch die Bedienung anderer potentiell gefährdender, mit dem Bediengerät bedienbare Einrichtungen umfassen, wie etwa die Bedienung von Heizorganen etc.

Weiter vorzugsweise ist der ersten Sicherheitszone eine erste bedienbare Einrichtung, insbesondere ein erstes bewegbares Organ der Verpackungsanlage zugeordnet und eine zweite bedienbare Einrichtung, insbesondere ein zweites bewegbares Organ einer zweiten Sicherheitszone, wobei mit dem gekoppelten mobilen Bediengerät, sofern sich das mobile Bediengerät oder der Werker innerhalb der ersten Sicherheitszone befinden, die der ersten Sicherheitszone zugeordnete erste bedienbare Einrichtung bedienbar ist, nicht aber die der zweiten Sicherheitszone zugeordnete zweite bedienbare Einrichtung.

In weiterer Ausbildung der Erfindung weist die Erkennungseinrichtung Sensoren auf, mit denen detektierbar ist, wenn sich das mobile Bediengerät oder der Werker in einer der Sicherheitszonen aufhalten oder in diese eindringen, wobei jeder Sicherheitszone mindestens ein Sensor der Erkennungseinrichtung derart zugeordnet ist, dass erkennbar ist, in welcher der mehreren Sicherheitszonen sich das Bediengerät oder der Werker aufhalten bzw. in welcher der mehreren Sicherheitszonen das Bediengerät oder der Werker eindringen.

Die Sensoren sind bevorzugt insbesondere im Bodenbereich der jeweiligen Sicherheitszone angeordnete Sensoren.

Vorzugsweise sind dies berührungs- oder drucksensitive oder auf Licht oder andere elektromagnetische Wellen reagierende Sensoren. Auch andere Sensorarten sind allerdings denkbar.

Jede Sicherheitszone wird vorzugsweise begrenzt durch eine oder mehrere, von einem Werker begehbare, insbesondere als Sensoren fungierende Bodenplatten oder Bodenmatten, bevorzugt von berührungs- oder drucksensitiven Bodenplatten oder Bodenmatten.

Was die Übertragung von Signalen zwischen dem gekoppelten mobilen Bediengerät und der Verpackungsanlage betrifft, so erfolgt diese vorzugsweise drahtlos, beispielsweise über Funk. Die Übertragung kann aber auch drahtgebunden erfolgen mittels einer entsprechenden Kabelsignalleitung.

Zweckmäßigerweise weist die Verpackungsanlage wenigstens ein einen Empfänger und gegebenenfalls zusätzlich einen Sender elektromagnetischer Wellen (insbesondere falls die Übertragung drahtlos erfolgt) oder elektrischer Signale (insbesondere falls die Signalübertragung drahtgebunden erfolgt) aufweisendes Kommunikationsmodul auf, mit dem das mobile Bediengerät koppelbar ist und über das (Fernsteuer-)Signale zur Bedienung mindestens einer bedienbaren Einrichtung, insbesondere eines bewegbaren Organs der Verpackungsanlage von dem Bediengerät an Steuereinrichtung der Verpackungsanlage übermittelbar sind, die dann die bedienbare Einrichtung, insbesondere einen Antrieb des bewegbaren Organs steuert.

Das Kommunikationsmodul wäre dann im gekoppelten Zustand des Bediengeräts zum einen mit dem Bediengerät entsprechend (drahtlos oder drahtgebunden) verbunden. Zum anderen wäre es mit wenigstens einer Steuereinrichtung der Verpackungsanlage verbunden und könnte entsprechend die von dem Bediengerät stammenden Signale an diese weiterleiten. Beispielsweise mit der Hauptanlagensteuerung oder mit ein oder mehreren lokalen Steuerungen, die jeweils auf Basis dieser Signale ein oder mehrere (Servo-)Antriebe steuern. Jeder (Servo-)Antrieb könnte dann mindestens ein bewegbares Organ antreiben.

In weiterer Ausbildung der Erfindung könnte die Verpackungsanlage mehrere Kommunikationsmodule aufweisen, von denen jedes einer anderen Sicherheitszone zugeordnet ist. Die Kommunikationsmodule können entsprechend in verschiedenen Bereichen der Anlage positioniert sein.

Weiter könnte das System derart ausgebildet sein, dass nach Empfang von eine bestimmte Berechtigungsstufe repräsentierenden Daten eines separaten Berechtigungsdatenträgers durch die Verpackungsanlage aus einer Gesamtmenge möglicher, mit dem Bediengerät bedienbarer Einrichtungen, insbesondere bewegbarer Organe der Verpackungsanlage, eine der Berechtigungsstufe entsprechende Teilmenge von Einrichtungen bzw. bewegbarer Organe für die Bedienung mit dem mobilen Bediengerät freigeschaltet wird, sodass diese Teilmenge anschließend mit dem Bediengerät bedienbar ist.

Dabei kann vorgesehen sein, dass diese Daten von dem mobilen Bediengerät im gekoppelten Zustand übermittelt werden. Zu diesem Zweck ist denkbar, dass der Berechtigungsdatenträger zuvor drahtlos oder drahtgebunden mit einer Schnittstelle des Bediengeräts gekoppelt wird und die Daten zunächst auf das Bediengerät übertragen werden, die dieses dann im gekoppelten Zustand an die Verpackungsanlage übermittelt.

Alternativ können diese Daten ausgehend von dem Berechtigungsdatenträger auch direkt an die Anlage übermittelt werden, beispielsweise an ein entsprechend eingerichtetes Kommunikationsmodul derselben.

Was die Verpackungsanlage betrifft, so kann sie mehrere, zu einer Verpackungslinie zusammengefasste Verpackungsmaschinen umfassen, wobei jeder Verpackungsmaschine mindestens eine eigene, sich im Umfeld der jeweiligen Verpackungsmaschine erstreckende Sicherheitszone zugeordnet ist. Die Anlage kann aber auch nur eine Maschine mit einer oder mehreren Sicherheitszonen umfassen.

Zusätzlich oder alternativ (also "und/oder") kann die Verpackungsanlage mindestens eine modulartig aufgebaute Verpackungsmaschine aus mehreren Fertigungsmodulen aufweisen, wobei jedes Fertigungsmodul über jeweils eine Fertigungseinheit mit mindestens einer bedienbaren Einrichtung, insbesondere einem bewegbaren Organ verfügt, und wobei jedem Fertigungsmodul eine eigene, sich im Umfeld des jeweiligen Fertigungsmoduls erstreckende Sicherheitszone zugeordnet ist.

Was die Ausbildung der (virtuellen) Sicherheitszonen betrifft, so handelt es sich vorzugsweise um separate, sich nicht überlappende Zonen. Sie könnten sich aber grundsätzlich auch überlappen.

Vorzugsweise wird jede Verpackungsmaschine der Verpackungsanlage oder jedes Fertigungsmodul der Verpackungsmaschine mindestens teilweise, bevorzugt vollständig von einer eigenen Sicherheitszone umgeben.

Jeweils zwei verschiedene Sicherheitszonen der der Verpackungsanlage zugeordneten Sicherheitszonen können lückenlos oder im Wesentlichen lückenlos aneinander angrenzen.

Die Sicherheitszonen können die gesamte Verpackungsanlage lückenlos oder im Wesentlichen lückenlos einfassen.

Eine erfindungsgemäße Verpackungsanlage ist derart ausgebildet, dass sie mit einem mobilen Bediengerät koppelbar ist, insbesondere einem Smart-Device, zum (Fern-)Bedienen von mit diesem bedienbaren Einrichtungen der Verpackungsanlage, insbesondere bewegbaren Organen, mehrere Sicherheitszonen im räumlichen Umfeld der Verpackungsanlage aufweist, sowie entsprechend eine Erkennungseinrichtung, mit der im gekoppelten Zustand des mobilen Bediengeräts für den Fall, dass sich das Bediengerät oder ein das mobile Bediengerät benutzender Werker innerhalb einer der Sicherheitszonen befinden, erkannt werden kann, in welcher Sicherheitszone sich das Bediengerät oder der Werker befinden.

Ein erfindungsgemäßes Verfahren zeichnet sich durch folgende Maßnahmen aus:
- mit der Verpackungsanlage wird ein mobiles Bediengerät gekoppelt, insbesondere ein Smart-Device, zum (Fern-)Bedienen von mit diesem bedienbaren Einrichtungen der Verpackungsanlage, bevorzugt drahtlos,
- im gekoppelten Zustand des mobilen Bediengeräts wird erkannt, ob sich das Be-diengerät oder ein das Bediengerät benutzender Werker in einer von mehreren der Verpackungsanlage zugeordneten Sicherheitszonen im räumlichen Umfeld der Verpackungsanlage befinden,
- für den Fall, dass sich das Bediengerät oder ein das mobile Bediengerät benutzender Werker innerhalb einer der Sicherheitszonen befinden, wird erkannt, in welcher Sicherheitszone sich das Bediengerät oder der Werker befinden.

Es versteht sich, dass sämtliche weiteren oben und nachfolgend im Zusammenhang mit dem erfindungsgemäßen System beschriebenen Merkmale - soweit es sich um Vorrichtungsmerkmale handelt - sinngemäß als Verfahrensschritte und/oder Merkmale der Verpackungsanlage formuliert bzw. umgesetzt werden können (und umgekehrt).

Weitere Merkmale der vorliegenden Erfindung ergeben sich aus den beigefügten Patentansprüchen, der nachfolgenden Beschreibung bevorzugter Ausführungsbeispiele sowie aus den beigefügten Zeichnungen. In diesen zeigen:
- Fig. 1: eine Draufsicht auf eine erste Ausführungsform einer Verpackungsanlage für Zigaretten in schematischer Darstellung, nämlich eine aus mehreren Verpackungsmaschinen bestehende Verpackungsanlage,
- Fig. 2: eine schematische Schrägansicht einer zweiten Ausführungsform einer Verpackungsanlage für Zigaretten, nämlich eine modulare Verpackungsmaschine zur Herstellung von Dichtpackungen in schematischer Schrägansicht,

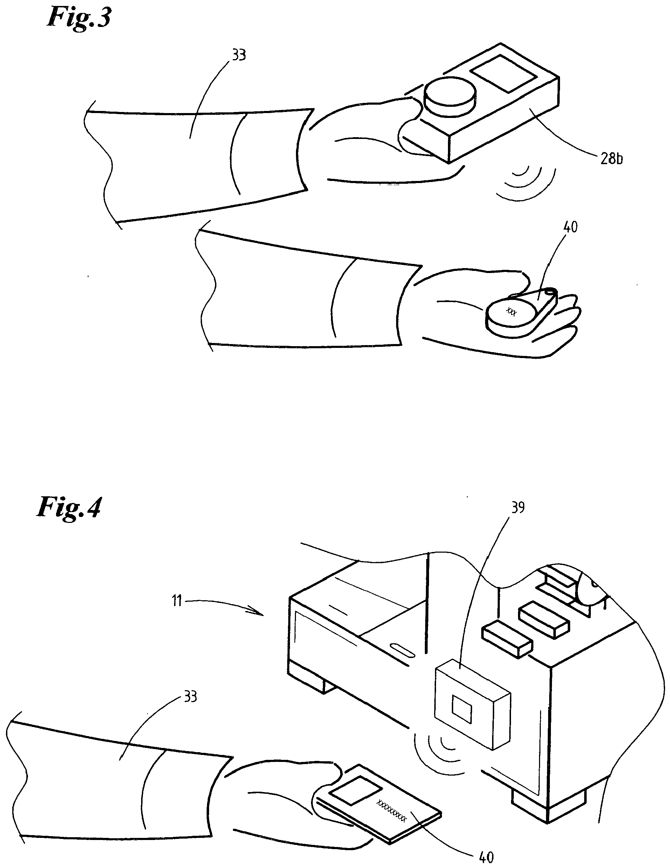

- Fig. 3: ein Bediengerät zur Bedienung einer Verpackungsanlage zusammen mit einem mit diesem kommunizierenden Datenträger,
- Fig. 4: einen Teilausschnitt der Verpackungsanlage aus Fig. 2 zusammen mit einer Karte zur Steuerung der Berechtigung eines Werkers,
- Fig. 5-8: verschiedene Ausführungsformen von Sensoren einer Erkennungseinrichtung, mit denen erkannt werden kann, ob ein Werker eine Sicherheitszone der Verpackungsanlage betritt oder sich dort aufhält.

Die Erfindung wird nachfolgend anhand von zwei Verpackungsanlagen 10 und 11 für Tabakartikel exemplarisch erläutert.

Die Verpackungsanlage 10 beinhaltet im gezeigten Ausführungsbeispiel eine gesamte Verpackungslinie von der Herstellung der Zigaretten bis zur Verpackung von Gebindepackungen. Es versteht sich, dass es sich bei einer solchen Verpackungsanlage 10 aber nicht zwangsläufig um eine ganze Verpackungslinie handeln muss.

Eine Verpackungsanlage 10 kann auch lediglich einige wenige oder auch nur eine einzige Verpackungsmaschine oder ein einziges Verpackungsaggregat aufweisen.

Die Erfindung kann im Übrigen nicht nur im Zusammenhang mit der Verpackung von Tabakartikeln, wie Zigaretten, Zigarillos oder dergleichen zum Einsatz kommen, sondern auch bei anderen Produkten, wie beispielsweise Hygieneprodukten.

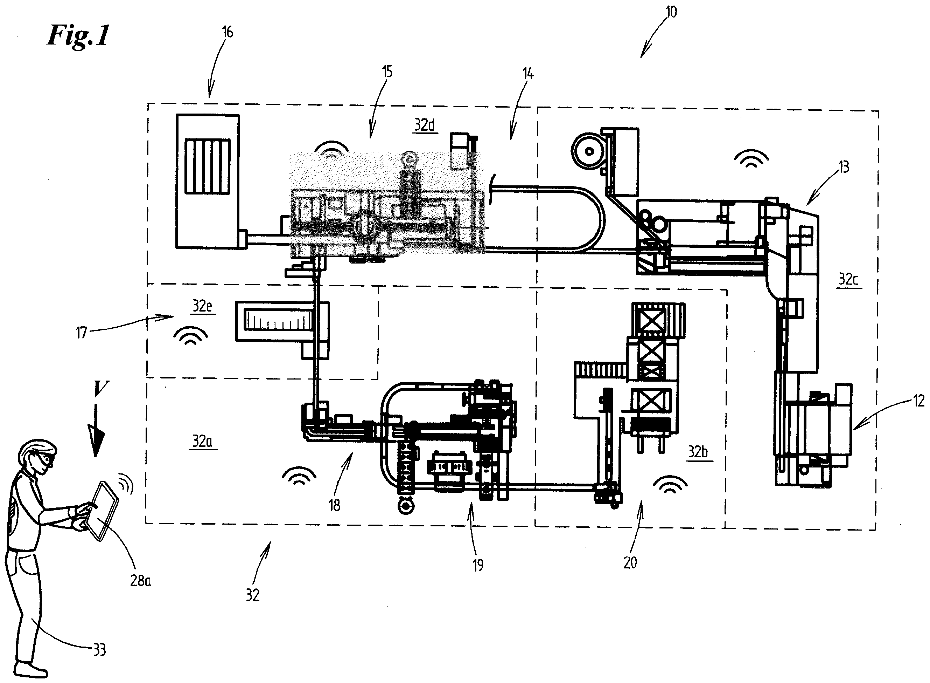

Die Verpackungsanlage 10 gemäß Fig. 1 verfügt über eine Reihe von Verpackungsmaschinen oder Verpackungsaggregaten - im Folgenden zusammenfassend als Verpackungsmaschine bezeichnet -, die das herzustellende Produkt bzw. Zwischenprodukt während der Bearbeitung innerhalb der Verpackungsanlage 10 durchläuft. Jede Verpackungsmaschine wiederum weist eine Reihe von Fertigungseinrichtungen auf. Unter anderem bewegbare Organe, wie Förderer, Siegelorgane, Faltorgane und dergleichen mehr. Bei der Verpackungsanlage 10 folgen exemplarisch folgende Maschinen innerhalb der Verpackungslinie bzw. des Verpackungsprozesses aufeinander:
- Maker 12,
- Filteransetzer 13,
- Zigarettenspeicher 14,
- Hinge-Lid-Packer 15,
- Zuschnittmagazin 16,
- Packungsspeicher 17,
- Cellophaniermaschine 18,
- Stangenpacker 19,
- Kartonpacker 20.

Der grundsätzliche Aufbau einer solchen Anlage und die entsprechenden Fertigungs- bzw. Verpackungsprozesse sind im Stand der Technik bekannt.

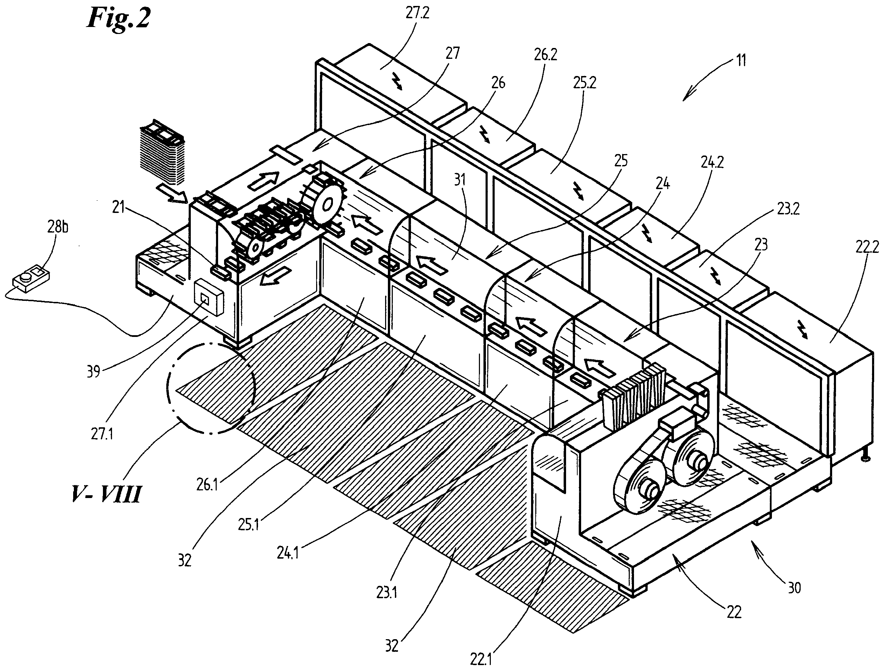

Die Anlage 11 aus Fig. 2 umfasst eine Verpackungsmaschine 30 zur Herstellung von sogenannten Dichtpackungen 21. Die Funktionsweise einer solchen Verpackungsmaschine zur Herstellung von Dichtpackungen ist bekannt.

Die Verpackungsmaschine 30 ist modular aufgebaut. Sie verfügt vorliegend über sechs separate Fertigungsmodule 22-27 mit jeweils einzelnen Fertigungseinheiten 22.1-27.1, in denen die eigentlichen Fertigungsprozesse ablaufen, sowie mit diesen jeweils über Steuerungs- und Stromleitungen verbundene Schaltschrankmodule 22.2-27.2 mit jeweils elektronischen und elektrischen Komponenten zum Betrieb des jeweiligen Fertigungsmoduls bzw. der jeweiligen Fertigungseinheit. Einige oder sämtlich der Fertigungseinheiten weisen - ähnlich wie die Maschinen der Verpackungsanlage 10 - bewegbare Organe auf, wie Förderer, Siegelorgane, Faltorgane etc.

Die Aufteilung des Fertigungsprozesses auf einzelne Module kann auch in anderer Weise als nachfolgend geschildert vorgenommen werden. Die Fertigungsmodule des vorliegenden Ausführungsbeispiels sind exemplarisch die Folgenden:
- Formierungsmodul 22,
- Innenzuschnittmodul 23,
- Quersiegelmodul 24,
- Querschneidemodul 25,
- Fertigungsmodul zur Anlage von sogenannten Flossen der Dichtfolie an einen Tray 26,
- Außenzuschnittmodul 27.

Sowohl Maschinen 12-20 der Verpackungsanlage 10 als auch Fertigungsmodule 22-27 der Verpackungsanlage 10 müssen eingerichtet oder gewartet werden. Zu diesen Zweck ist es häufig notwendig, Schutzgehäuse oder Schutzhauben 31 der Anlagen 10, 11 bzw. der einzelnen Maschinen 12-20 bzw. der Fertigungsmodule 22-27 zu öffnen. Diese überdecken im Normalbetrieb der Anlagen 10,11 bestimmte, unter Gefährdungsgesichtspunkten für Werker relevante Einrichtungen, insbesondere bewegbare oder heiße Organe.

Um mindestens ein Teil dieser Einrichtungen auch im Einrichtbetrieb, in dem die jeweilige Anlage 10, 11 oder ein Teil derselben in der Regel still steht, bedarfsweise gezielt bedienen zu können, werden mobile Bediengeräte eingesetzt. Etwa das in Fig. 1 gezeigte Bediengerät 28a oder das in Fig. 2 gezeigte Bediengerät 28b, die jeweils mit der Anlage 10, 11 verbunden werden. Ein Werker 33 kann diese dann bedienen.

Das Bediengerät 28b aus Fig. 2 wird beispielsweise mit einem Kabel an eine geeignete Schnittstelle der Anlage 11 angekoppelt. Das Bediengerät 28a, etwa ein Tablet, eine Datenbrille oder ein anderes Smart-Device, wird vorliegend drahtlos über eine Funkverbindung an die Anlage 10 angekoppelt. Zu diesem Zweck verfügen die Anlagen 10, 11 jeweils über geeignet (Signal- oder Daten-)Schnittstellen. Hierauf wird später noch näher eingegangen.

Je nach Ausgestaltung ist es beispielsweise denkbar, mit einem solchen Bediengerät 28a, b eine elektronische oder mechanische Königswelle der Anlage 10, 11 bzw. den zentralen Antrieb einer solchen Königswelle gezielt in Drehungen zu versetzen, sodass letztlich alle von dieser abhängigen, bewegbaren Organe, wie Faltorgane, Förderer etc. mitbewegt werden.

Weiter ist es denkbar, einzelne oder sämtliche (Servo-)Antriebe von bewegbaren Organen gezielt mit einem solchen Bediengerät 28a, b zu bedienen.

Nicht nur, aber insbesondere ein Einricht- oder Wartungsbetrieb ist regelmäßig bezogen auf Sicherheitsaspekte besonders kritisch. Denn der Werker 33 könnte sich bei geöffneten Hauben 31 der Maschine(n) 12-20 / der Module 22-27 an potentiell gefährlichen bzw. gefährdenden Einrichtungen verletzen, sobald diese jeweils bei offenen Hauben 31 in Betrieb versetzt werden. Dies gilt insbesondere für bewegbare Organe.

Je nach Reichweite der Kabelverbindung zwischen Bediengerät 28b und Verpackungsanlage 11 bzw. der Reichweite der entsprechenden Drahtlosverbindung zwischen Bediengerät 28a und Verpackungsanlage 10 kann es passieren, dass ein das Bediengerät 28a, 28b benutzender Werker 33 weit von seinem Standort entfernt beispielsweise bewegbare Organe in Bewegung versetzen kann, ohne Sichtkontakt zu diesen zu haben. Andere Personen, die in der Nähe dieser entfernten bewegbaren Organe arbeiten oder sich dort aufhalten, werden hierdurch gefährdet, ohne dass dies der das Bediengerät 28a, 28b benutzende Werker 33 feststellen kann.

Das erfindungsgemäße System zum Betreiben der Verpackungsanlage 10 bzw. 11 sieht daher vor, virtuelle Sicherheitszonen 32 im Umfeld der Verpackungsanlage 10 bzw. 11 anzuordnen.

Diese Sicherheitszonen 32 sind letztlich Überwachungsbereiche, in denen das System überwacht oder erkennt, ob sich das Bediengerät 28a, b oder der Werker 33 in diesen aufhält und bejahendenfalls in welcher der Zonen 32. Zu diesem Zweck weist die Verpackungsanlage 10, 11 eine Erkennungseinrichtung auf, mit der diese Überwachung bzw. Erkennung auf Sicherheitszonenebene möglich ist.

Die Sicherheitszonen 32 sind regelmäßig so ausgebildet, dass sie sich nicht überlappen, vgl. Fig. 1 und 2. Dies muss aber nicht so sein.

In dem Beispiel der Fig. 1 grenzen immer jeweils mindestens zwei verschiedene Sicherheitszonen 32 der Verpackungsanlage 10 lückenlos oder im Wesentlichen lückenlos aneinander an. Die Sicherheitszonen 32 bilden dabei einen lückenlosen Teppich, auf bzw. in dem die gesamte Anlage 10 bzw. die Maschinen 12-20 angeordnet ist/sind.

Dabei wird jede Verpackungsmaschine 12 - 20 der Anlage 10 vollständig von der eigenen Sicherheitszone 32 der jeweils zugeordneten Sicherheitszone 32 umgeben.

Bei der Ausführungsform der Fig. 2 grenzt jede Sicherheitszone 32 mindestens in einem Abschnitt an das ihr zugeordnete Fertigungsmodul 22-27 an.

Was die vorgenannte Erkennungseinrichtung betrifft, so verfügt diese in der Regel über Sensoren, mit der die beschriebene Erkennung bzw. Überwachung möglich ist. Jeder der Sicherheitszonen 32 ist zu diesem Zweck mindestens ein solcher Sensor eindeutig zugeordnet.

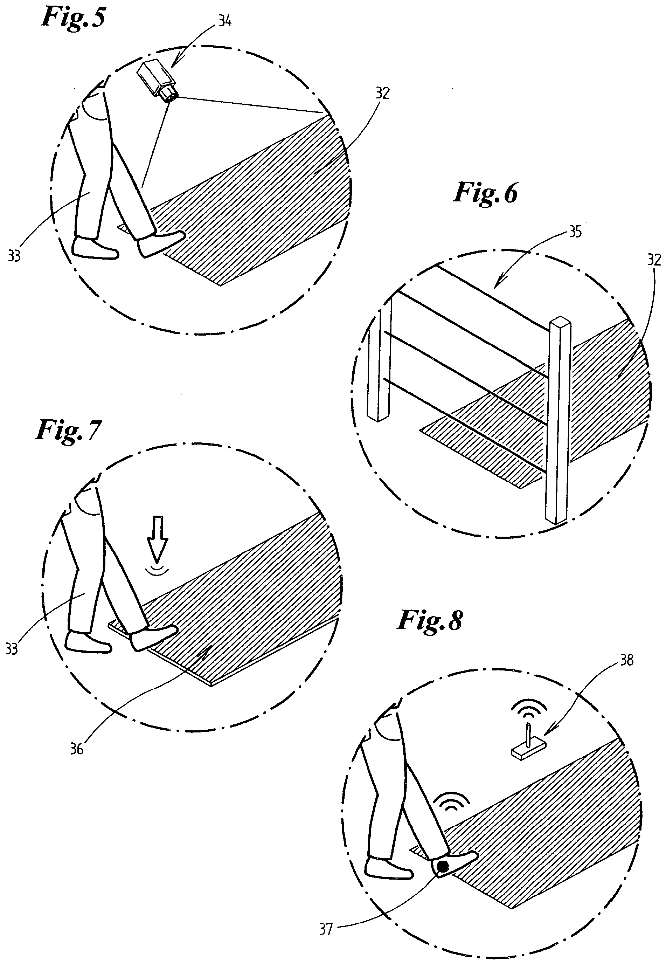

In den Fig. 5-8 sind verschiedene einsetzbare Sensorvarianten gezeigt.

Beispielsweise könnte eine Erkennungseinrichtung auf optischen Erkennungsverfahren mit entsprechenden optischen Sensoren basieren.

So könnte eine Erkennungseinrichtung Überwachungskameras 33 aufweisen, wobei jeweils (mindestens) eine Überwachungskamera 33 auf eine bzw. die ihr zugeordnete Sicherheitszone 32 oder einen Teil derselben gerichtet ist. Sobald ein Werker 33 in die überwachte Sicherheitszone 32 eindringt oder sich dort aufhält, wird dies mittels Überwachungskamera 33 registriert.

Alternativ könnte eine oder jede Sicherheitszone 32 auch mit einer oder mehreren Lichtschranken 35 ausgerüstet sein, die ein Betreten derselben/einen Aufenthalt darin registrieren können.

Eine weitere Möglichkeit wäre, berührungs- oder drucksensitive Bodenplatten 36 einzusetzen, die bei Betreten derselben ein entsprechendes Signal erzeugen.

Alternativ könnten Werker 33 oder auch das Bediengerät 28a, 28b mit einem elektronischen Überwachungsbauteil 37 ausgestattet sein, beispielsweise einem Peilsender elektromagnetischer Wellen, das drahtlos mit einem der Sicherheitszone 32 zugeordneten Überwachungsgerät 38 wechselwirkt, etwa einem Peilempfänger elektromagnetischer Wellen, und erkennt, wenn der Werker 33 bzw. das Überwachungsbauteil 37 in die Sicherheitszone 32 eindringt.

Abhängig von den eingesetzten Sensoren umfasst die Erkennungseinrichtung darauf abgestimmte Auswertemittel, mit denen die Signale der Sensoren aufbereitet und verarbeitet werden können. Etwa Auswerteprozessoren bzw. Auswerterechner und/oder, Auswerteschaltungen und/oder Auswertesoftware.

Durch die geschilderte Definition der Sicherheitszonen 32 an bzw. allgemein im Umfeld der Verpackungsanlagen 10, 11 sowie die geschilderte Erkennung, ggf. in welcher Sicherheitszone 32 sich das Bediengerät 28a, 28b oder der Werker 33 befinden, schafft das System die Möglichkeit, unabhängig von der tatsächlichen Reichweite der Signalleitung des Signalübertragungswegs zwischen gekoppeltem Bediengerät 28a, 28b und Verpackungsanlage 10, 11 diejenigen Einrichtungen und insbesondere bewegbaren Organe der Anlagen 10, 11 festlegen zu können, auf die das Bediengerät 28a, 28b Einfluss haben soll.

So kann das System auf diese Weise ohne Weiteres derart ausgebildet werden, dass für den Fall, dass sich das Bediengerät 28a oder der Werker 33 in einer Sicherheitszone 32a der Verpackungsanlage 10 befinden, die den Maschinen 18, 19 zugeordnet ist, sämtliche mit dem Bediengerät 28a bedienbaren bewegbaren Organe der Verpackungsanlage 10, die den anderen Sicherheitszonen 32b-e zugeordnet sind, nicht bedienbar sind. Insbesondere sämtliche bewegbaren Organe der anderen Sicherheitszonen 32b-e.

Weiter kann für den Fall, dass sich der Werker 33 bzw. das Bediengerät 28a, b aus der Sicherheitszone 32a herausbewegen, vorgesehen sein, dass die der Sicherheitszone 32 zugeordneten bedienbaren Einrichtungen bzw. bewegbaren Organe ab diesem Zeitpunkt nicht mehr weiter bedienbar sind.

Zur Umsetzung der vorbeschriebenen sowie der noch im Weiteren geschilderten Gedanken kann das System bzw. die Verpackungsanlage 10, 11 jeweils über eine oder mehrere Steuereinrichtungen verfügen, die im Normalbetrieb das oder die mit dem Bediengerät 28a, 28 bedienbaren Einrichtungen, insbesondere die bewegbaren Organe bzw. deren Antriebe steuern und die von einer Steuerungssoftware oder einer Schaltungseinrichtung des Systems bzw. der Verpackungsanlage 10, 11 nach Maßgabe der Signale der Erkennungseinrichtungen für eine (Fern-)Bedienung mit dem Bediengerät 28a, 28b freigeschaltet oder gesperrt werden.

Die Verpackungsanlagen 10, 11 weisen im Übrigen jeweils ein bzw. mehrere einen Empfänger und gegebenenfalls zusätzlich einen Sender elektromagnetischer Wellen (wenn die Übertragung drahtlos erfolgt) oder elektrischer Signale (wenn die Signalübertragung drahtgebunden erfolgt) aufweisende Kommunikationsmodule 39 auf, mit denen das mobile Bediengerät 28a, 28b jeweils koppelbar ist und über das die (Fernsteuer-)Signale zur Bedienung der bewegbaren Organe der Verpackungsanlage 10, 11 von dem Bediengerät 28a, 28b an die entsprechenden Steuereinrichtungen bzw. im Anschluss an die bedienbaren Einrichtungen übermittelbar ist, insbesondere an den entsprechenden Antrieb des jeweiligen bewegbaren Organs.

Das Kommunikationsmodul 39 wäre dann im gekoppelten Zustand des Bediengeräts 28a, 28b zum einen mit dem Bediengerät 28a, 28b entsprechend (drahtlos oder drahtgebunden) verbunden. Zum anderen wäre es vorzugsweise mit wenigstens einer Steuereinrichtung der Verpackungsanlage 10, 11 verbunden und würde entsprechend die von dem Bediengerät 28a, 28b stammenden Signale an diese weiterleiten. Beispielsweise könnte es mit der Hauptanlagensteuerung verbunden sein oder mit ein oder mehreren lokalen Steuerungen, die jeweils ein oder mehrere (Servo-)Antriebe steuern. Jeder (Servo-)Antrieb könnte dann mindestens ein bewegbares Organ antreiben.

Die Verpackungsanlage 10 weist beispielsweise mehrere solcher Kommunikationsmodule 39 auf, von denen jedes einer anderen Sicherheitszone 32a-e zugeordnet ist. Die Kommunikationsmodule 39 sind entsprechend in verschiedenen Bereichen der Anlage 10 positioniert.

Das System kann zur weiteren Erhöhung der Sicherheit im Übrigen so ausgebildet sein, dass eine Kopplung des Bediengeräts 28a nur jeweils mit einem der Kommunikationsmodule 39 möglich ist, nämlich demjenigen, das sich im unmittelbaren Umfeld des Bediengeräts 28a befindet. Dies könnte beispielsweise über eine entsprechende Begrenzung der Reichweite der Signalleitung bzw. der Reichweite der Signalübertragung umgesetzt werden.

Gemäß einem weiteren Aspekt der Erfindung ist das System derart ausgebildet, dass bestimmte Berechtigungsstufen eingestellt werden können. Beispielsweise kann vorgesehen sein, dass ein Werker mit einer ersten, niedrigeren Berechtigungsstufe andere und/oder weniger bedienbare Einrichtungen, insbesondere bewegbare Organe der Anlagen 10, 11 mit den Bediengeräten 28a, 28b bedienen darf als ein Werker mit einer höheren Berechtigungsstufe.

Die Berechtigungsstufen können beispielsweise über das Bediengerät 28a, 28b eingestellt werden. So kann vorgesehen sein, dass ein Werker, um die Anlage 11 bedienen zu dürfen, zunächst das Bediengerät 28b mit einem separaten mobilen Berechtigungsdatenträger 40 koppeln muss. Auf diesem Berechtigungsdatenträger 40 sind eine bestimmte Berechtigungsstufe repräsentierende Daten gespeichert. Diese Daten können von dem Bediengerät 28b ausgelesen und an die Anlage 11 übermittelt werden.

In der konkreten Umsetzung kann vorgesehen sein, dass der Berechtigungsdatenträger 40, bspw. eine Datenkarte oder ein Datenchip, über Nahfeldkommunikation (NFC) mit dem entsprechend eingerichteten Bediengerät 28b kommuniziert. Im einfachsten Fall wird der Datenträger in das Bediengerät 28b eingesteckt.

Alternativ kann das System auch so ausgebildet sein, dass der mobile Berechtigungsdatenträger 40 unmittelbar mit einem Kommunikationsmodul 39 der Anlage kommuniziert (drahtlos oder durch körperliches Verbinden mit einer geeigneten Schnittstelle der Anlage, ggf. einer Schnittstelle des Kommunikationsmoduls 39), sodass die Berechtigungsdaten ohne Umweg über das Bediengerät 28b direkt an die Anlage 11 übermittelt werden.

Das System bewertet unabhängig von der konkreten Ausgestaltung der Übertragung der Berechtigungsdaten die übertragenen Daten und gibt dann eine bestimmte, der Berechtigung entsprechende Gruppe von bewegbaren Organen für die Bedienung durch das Bediengerät 28a oder 28b frei.

Es versteht sich, dass das vorliegende System nicht zur Anwendung im Einrichtungsbetrieb einer Verpackungsanalage beschränkt ist, sondern grundsätzlich auch im Produktionsbetrieb oder anderen Betriebsphasen eingesetzt werden kann.

Weiter versteht sich, dass der Fachmann das System steuer- und/oder softwareseitig in verschiedenster Art umsetzten kann, ohne die Kerngedanken der Erfindung zu verlassen.

**Bezugszeichenliste:**

| | | | |
|---|---|---|---|
| 10 | Verpackungsanlage | 26.2 | Schaltschrank |
| 11 | Verpackungsanlage | 27 | Fertigungsmodul |
| 12 | Maker | 27.1 | Fertigungseinheit |
| 13 | Filteransetzer | 27.2 | Schaltschrank |
| 14 | Zigarettenspeicher | 28a | Bediengerät |
| 15 | Hinge-Lid-Packer | 28b | Bediengerät |
| 16 | Zuschnittmagazin | 30 | Verpackungsmaschine |
| 17 | Packungsspeicher | 31 | Schutzhaube |
| 18 | Cellophaniermaschine | 32 | Sicherheitszonen |
| 19 | Stangenpacker | 32a-e | Sicherheitszonen |
| 20 | Kartonpacker | 33 | Werker |
| 21 | Dichtpackung | 34 | Überwachungskamera |
| 22 | Fertigungsmodul | 35 | Lichtschranke |
| 22.1 | Fertigungseinheit | 36 | Bodenplatte |
| 22.2 | Schaltschrank | 37 | Bauteil |
| 23 | Innenzuschnittmodul | 38 | Gerät |
| 23.1 | Fertigungseinheit | 39 | Kommunikationsmodul |
| 23.2 | Schaltschrank | 40 | Berechtigungsdatenträger |
| 24 | Quersiegelmodul | | |
| 24.1 | Fertigungseinheit | | |
| 24.2 | Schaltschrank | | |
| 25 | Querschneidemodul | | |
| 25.1 | Fertigungseinheit | | |
| 25.2 | Schaltschrank | | |
| 26 | Außenzuschnittmodul | | |
| 26.1 | Fertigungseinheit | | |

## Patentansprüche

1. System zum Betreiben einer Verpackungsanlage (10, 11) für Produkte, insbesondere Tabakartikel, mit einem mit der Verpackungsanlage (10, 11) koppelbaren und wieder entkoppelbaren, mobilen Bediengerät (28a, b), insbesondere einem Smart-Device, zum (Fern-)Bedienen von bedienbaren, insbesondere potentiell Werker gefährdenden Einrichtungen der Verpackungsanlage, beispielsweise bewegbaren Organen, mit mehreren, bevorzugt sich nicht überlappenden Sicherheitszonen (32) im räumlichen Umfeld der Verpackungsanlage (10, 11), und mit einer Erkennungseinrichtung, mit der im gekoppelten Zustand des mobilen Bediengeräts (28a, b) für den Fall, dass sich das mobile Bediengerät (28a, b) oder ein das mobile Bediengerät benutzender Werker innerhalb einer der Sicherheitszonen (32) befinden, erkannt wird, in welcher Sicherheitszone (32) sich das Bediengerät (28a, b) oder der Werker (33) befinden.

2. System gemäß Anspruch 1, **dadurch gekennzeichnet, dass** einer ersten Sicherheitszone (32) eine erste bedienbare Einrichtung der Verpackungsanlage (10, 11), insbesondere ein erstes bewegbares Organ, zugeordnet ist, die mit dem gekoppelten mobilen Bediengerät (28a, b) bedienbar ist, sofern sich das mobile Bediengerät (28a, b) oder der Werker innerhalb der ersten Sicherheitszone (32) befinden, mit diesem dagegen nicht bedienbar ist, sofern sich das mobile Bediengerät (28a, b) oder der Werker außerhalb der ersten Sicherheitszone befinden.

3. System gemäß Anspruch 1 oder 2, **dadurch gekennzeichnet, dass** einer ersten Sicherheitszone (32) eine erste mit dem mobilen Bediengerät (28a, b) bedienbare Einrichtung der Verpackungsanlage (10, 11), insbesondere ein erstes bewegbares Organ, zugeordnet ist, und eine zweite mit dem mobilen Bediengerät (28a, b) bedienbare Einrichtung, insbesondere ein zweites bewegbares Organ, einer zweiten Sicherheitszone (32), und dass mit dem gekoppelten mobilen Bediengerät (28a, b), sofern sich das mobile Bediengerät (28a, b) oder der Werker innerhalb der ersten Sicherheitszone (32) befinden, die der ersten Sicherheitszone (32) zugeordnete erste bedienbare Einrichtung bedienbar ist, nicht aber die der zweiten Sicherheitszone (32) zugeordnete zweite bedienbare Einrichtung.

4. System gemäß einem oder mehreren der vorhergehenden Ansprüche, **dadurch gekennzeichnet, dass** die Erkennungseinrichtung Sensoren aufweist, mit denen detektierbar ist, wenn sich das mobile Bediengerät (28a, b) oder der Werker in einer der Sicherheitszonen (32) aufhalten oder in diese eindringen, wobei jeder Sicherheitszone (32) mindestens ein Sensor der Erkennungseinrichtung derart zugeordnet ist, dass erkennbar ist, in welcher Sicherheitszone (32) sich das Bediengerät (28a, b)/der Werker aufhalten bzw. in welche Sicherheitszone (32) das Bediengerät/der Werker eindringen.

5. System gemäß Anspruch 4, **dadurch gekennzeichnet, dass** die Sensoren insbesondere im Bodenbereich der jeweiligen Sicherheitszone (32) angeordnete, berührungs- oder drucksensitive Sensoren oder auf Licht oder andere elektromagnetische Wellen reagierende Sensoren sind.

6. System gemäß einem oder mehreren der vorhergehenden Ansprüche, **dadurch gekennzeichnet, dass** jede Sicherheitszone (32) begrenzt wird durch eine oder mehrere, von einem Werker begehbare, insbesondere als Sensoren fungierende Bodenplatten oder Bodenmatten, bevorzugt von berührungs- oder drucksensitiven Bodenplatten oder Bodenmatten, und/oder dass das mobile Bediengerät (28a, b) drahtlos mit der Verpackungsanlage (10, 11) koppelbar ist.

7. System gemäß einem oder mehreren der vorhergehenden Ansprüche, **dadurch gekennzeichnet, dass** die Verpackungsanlage (10, 11) wenigstens ein einen Empfänger und gegebenenfalls zusätzlich einen Sender elektromagnetischer Wellen oder elektrischer Signale aufweisendes Kommunikationsmodul aufweist, mit dem das mobile Bediengerät (28a, b) koppelbar ist und über das Signale zur Bedienung mindestens einer mit dem mobilen Bediengerät (28a, b) bedienbaren Einrichtung der Verpackungsanlage (10, 11), insbesondere mindestens eines bewegbaren Organs, von dem Bediengerät (28a, b) an eine Steuereinrichtung der Verpackungsanlage (10, 11) übermittelbar ist.

8. System gemäß Anspruch 6, **dadurch gekennzeichnet, dass** die Verpackungsanlage (10, 11) mehrere Kommunikationsmodule aufweist, von denen jedes einer anderen Sicherheitszone (32) zugeordnet ist.

9. System gemäß einem oder mehreren der vorhergehenden Ansprüche, **dadurch gekennzeichnet, dass** die Verpackungsanlage (10, 11) derart eingerichtet ist, dass nach Empfang von insbesondere drahtlos übermittelten, eine bestimmte Berechtigungsstufe repräsentierenden Daten eines separaten Berechtigungsdatenträgers (40) durch die Verpackungsanlage (10, 11) aus einer Gesamtmenge möglicher, mit dem Bediengerät (28a, b) bedienbarer Einrichtungen, insbesondere bewegbarer Organe der Verpackungsanlage (10, 11) eine der Berechtigungsstufe entsprechende Teilmenge von mit dem mobilen Bediengerät (28a, b) bedienbarer Einrichtungen für die Bedienung mit dem mobilen Bediengerät (28a, b) freigeschaltet wird, sodass diese Teilmenge anschließend mit dem Bediengerät (28a, b) bedienbar ist, insbesondere nach Empfang durch von dem mobilen Bediengerät (28a, b) übersandten Berechtigungsdaten.

10. System gemäß einem oder mehreren der vorhergehenden Ansprüche, **dadurch gekennzeichnet, dass** die Verpackungsanlage (10, 11) mehrere, zu einer Verpackungslinie zusammengefasste Verpackungsmaschinen umfasst, und dass jeder Verpackungsmaschine eine eigene, sich im Umfeld der jeweiligen Verpackungsmaschine erstreckende Sicherheitszone (32) zugeordnet ist, und/oder dass die Verpackungsanlage (10, 11) mindestens eine modulartig aufgebaute Verpackungsmaschine (10, 11) aus mehreren Fertigungsmodulen aufweist, wobei jedes Fertigungsmodul jeweils eine Fertigungseinheit mit mindestens einer mit dem mobilen Bediengerät bedienbaren Einrichtung aufweist, insbesondere einem bewegbaren Organ, und wobei jedem Fertigungsmodul eine eigene, sich im Umfeld des jeweiligen Fertigungsmoduls erstreckende Sicherheitszone (32) zugeordnet ist.

11. System gemäß Anspruch 10, **dadurch gekennzeichnet, dass** jede Verpackungsmaschine der Verpackungslinie oder jedes Fertigungsmodul der Verpackungsmaschine mindestens teilweise, bevorzugt vollständig von der eigenen zugeordneten Sicherheitszone (32) umgeben wird, und/oder dass jeweils zwei verschiedene Sicherheitszonen (32) der der Verpackungsanlage (10, 11) zugeordneten Sicherheitszonen (32) lückenlos oder im Wesentlichen lückenlos aneinander angrenzen.

12. System gemäß einem oder mehreren der vorhergehenden Ansprüche, **dadurch gekennzeichnet, dass** die Sicherheitszonen (32) zusammen die gesamte Verpackungsanlage (10, 11) lückenlos oder im Wesentlichen lückenlos einfassen.

13. Verpackungsanlage für Produkte, insbesondere Tabakartikel, die mit einem mobilen Bediengerät (28a, b) koppelbar ist, insbesondere einem Smart-Device, zum (Fern-)Bedienen von mit diesem bedienbaren Einrichtungen der Verpackungsanlage (10, 11), insbesondere bewegbaren Organen, mit mehreren Sicherheitszonen (32) im räumlichen Umfeld der Verpackungsanlage (10, 11), und mit einer Erkennungseinrichtung, mit der im gekoppelten Zustand des mobilen Bediengeräts (28a, b) für den Fall, dass sich das Bediengerät (28a, b) oder ein das mobile Bediengerät (28a, b) benutzender Werker innerhalb einer der Sicherheitszonen (32) befinden, erkannt werden kann, in welcher Sicherheitszone (32) sich das Bediengerät (28a, b) oder der Werker befinden.

14. Verpackungsanlage gemäß Anspruch 13, **gekennzeichnet durch** ein oder mehrere Merkmale der Ansprüche 1-12.

15. Verfahren zum Betreiben einer Verpackungsanlage für Produkte, insbesondere Tabakartikel, bei dem mit der Verpackungsanlage (10, 11) ein mobiles Bediengerät (28a, b), insbesondere ein Smart-Device, zum (Fern-)Bedienen von mit diesem bedienbaren Einrichtungen der Verpackungsanlage (10, 11) insbesondere drahtlos gekoppelt wird, insbesondere bewegbaren Organen, bei dem im gekoppelten Zustand des mobilen Bediengeräts (28a, b) erkannt werden kann, ob sich das Bediengerät (28a, b) oder ein das Bediengerät (28a, b) benutzender Werker in einer von mehreren der Verpackungsanlage (10, 11) zugeordneten Sicherheitszonen (32) im räumlichen Umfeld der Verpackungsanlage (10) befinden, und bei dem für den Fall, dass sich das Bediengerät (28a, b) oder ein das mobile Bediengerät (28a, b) benutzender Werker innerhalb einer der Sicherheitszonen (32) befinden, erkannt wird, in welcher Sicherheitszone (32) sich das Bediengerät (28a, b) oder der Werker befinden.

16. Verfahren gemäß Anspruch 15, **gekennzeichnet durch** ein oder mehrere Merkmale der Ansprüche 1-14.
